# EUROPEAN PATENT APPLICATION

(11) **EP 4 138 275 A1**
(43) Date of publication of application: **22.02.2023**
(21) Application number: 22186806.0
(22) Date of filing: 25.07.2022
(51) Int. Cl.: H02K 5/04, H02K 5/22, H02K 11/33, F04B 39/12, F04B 53/16, F04C 29/06, H05K 5/03, B60H 1/32

(54) **A COVER FOR A HOUSING OF AN ELECTRIC MACHINE**

(30) Priority: 19.08.2021 IN 202141037718
(71) Applicant: Valeo Japan Co., Ltd, Kumagaya-shi, Saitama 360-0193 (JP)
(72) Inventor: MATHESAN, Praveen, 600130 Chennai (IN); KUMAR, Kuldeep, 600130 Chennai (IN); MURATA, Tadahiro, Kumagaya-shi, 360-0193 (JP)
(74) Representative: Valeo Systèmes Thermiques

(57) **Abstract**

The present invention herein provides a cover for a housing encapsulating an inverter unit of an electric machine. The cover includes at least one main rib and a plurality of auxiliary ribs. The main rib is formed on a surface of the cover along a length "L" of the cover and the plurality of auxiliary ribs is extending to a distance from the main rib towards a periphery of the cover.

## Description

### TECHNICAL FIELD

The present invention relates to an electric machine, particularly to an electric compressor provided with a cover for a housing of the electric compressor. More particularly, to a cover for a housing of an electric compressor capable of withstanding static load and vibration acting on the cover of the compressor.

### BACKGROUND

Generally, an electric machine, particularly electric compressor, is provided in AC loop of a vehicle. The electric compressor includes a compression unit for compressing refrigerant, an electric motor that drives the compression unit, and an inverter assembly that drives the electric motor in a controlled manner. Further, housings are provided to encapsulate respective parts of the electric compressor and are mechanically coupled together with various fasteners. In one example, a motor housing is provided to encapsulate the electric motor, and an inventor housing is provided to encapsulate the inverter unit. The electric motor provided in the compressor enables the compression unit to draw the refrigerant from an inlet port formed on the motor housing to cool the electric motor by circulating the refrigerant through the motor housing. Generally, the motor housing is formed with the aluminium material in a cylindrical shape having openings on either sides. Further, the refrigerant enters into the compression unit for compression, and flows out from the electric compressor through a discharge port formed on a rear cover that is coupled to one end of the motor housing. From other end of the motor housing, the electric motor is inserted and is coupled with the inverter housing.

The inverter housing is designed as a chamber having an opening at a side of the inverter housing to receive the inverter unit. Further, the electric machine includes a cover adapted to close the open side of the inverter housing. In other words, the open side of the inverter housing may be covered by the cover and the periphery of the cover and the inverter housing is fastened by any connecting means such as screws etc. As the centre part of the cover is free from any connection with the inverter housing, it can vibrate due to vibration of the electric machine during the operation of the electric machine. In case the stiffness of the cover is low or sub-optimal, vibration frequency of the centre of the cover may be increased that leads to air-borne noise. In addition, the electric machine may experience a static load on the cover when the electric machine is assembled to the appropriate place of the vehicle. Due to the static load and the vibration acting on the cover, stress is seen at the center of the cover. As a result, the cover may damage or it may reduce the service life of the cover. To counter such stress developing on the cover, ribs are provided on an inner surface of the cover. Generally, the ribs are in the form of a Honeycomb structure. Although such structure provide robustness to the cover, it has some limitation such as it cannot be applied to non-circular shaped housing/cover. Further, such structure is provided on the inner surface of the cover, that may disturb the electrical connections inside the housing. As a result, the electric machine may encounter packaging issues while assembling the electric machine to the vehicle.

Accordingly, there remains a need for an electric machine provided with a cover for a housing of the electric compressor. Further, there remains another need for a cover provided with enough stiffness capable of withstanding vibrations and static load acting on the cover.

### SUMMARY

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of the foregoing, an embodiment of the present invention herein provides a cover for a housing encapsulating an inverter unit of an electric machine. The cover includes at least one main rib and a plurality of auxiliary ribs. The main rib is formed on a surface of the cover along a length "L" of the cover and the plurality of auxiliary ribs is extending to a distance from the main rib towards a periphery of the cover.

In one example, the main rib is a straight rib formed along the length "L" between two distal ends of the cover.

In another example, the main rib is an "S" shaped rib formed between two distal ends of the cover.

Further, the main rib comprising at least one curved portion and a straight portion alternatively formed with each other along the length of the cover.

Further, the main rib is discontinuous ribs formed on the cover having a gap between two ribs.

In one example, the plurality of auxiliary ribs is angularly extending from the main rib with respect to the axis of the main rib.

In another example, the plurality of auxiliary ribs is perpendicularly extending from the main rib.

According to another aspect, an electric machine, particularly an electric compressor for a vehicle's air-conditioner is provided. The electric machine includes a motor housing, an inverter housing and a cover. The motor housing is adapted to accommodate an electric motor and the inverter housing is having an open end to receive and accommodate an inverter unit. Further, the inverter housing is disposed at a side of the motor housing and the inverter unit is electrically connected to the electric motor to control the electric motor. Further, the cover is adapted to close the open end of the inverter housing.

In one example, the main rib and the plurality of auxiliary ribs are formed on an external surface of the cover facing away from the inverter unit received in the inverter housing.

In another example, the main rib and the plurality of auxiliary ribs are formed on an inner surface of the cover facing towards the inverter unit received in the inverter housing.

### BRIEF DESCRIPTION OF THE DRAWINGS

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates a sectional view of an electric machine, in accordance with an embodiment of the present invention;
Fig. 2A illustrates a top view of a cover of the electric machine of Fig. 1 depicting ribs on an external surface of the cover;
Fig. 2B illustrates a bottom view of the cover of the electric machine of Fig. 1 depicting an internal surface of the cover;
Fig. 2C illustrates a sectional view of the cover of Fig. 2A at the plane P-P' showing the ribs;
Fig. 3A illustrates a top view of the cover of the electric machine of Fig. 1 showing the ribs on the external surface of the cover, in accordance with another embodiment of the present invention;
Fig. 3B illustrates a bottom view of the cover of Fig. 3 depicting the internal surface of the cover;
Fig. 3C illustrates a sectional view of the cover of Fig. 3A at the plane P-P'; and
Fig. 4 illustrates a schematic view of the cover of Fig. 1 depicting a discontinuous rib formed on the external surface of the cover, in accordance with another embodiment of the present invention.

### DETAILED DESCRIPTION OF PREFERRED EMBODIMENTS

It must be noted that the figures disclose the invention in a detailed enough way to be implemented, the figures helping to better define the invention if needs be. The invention should however not be limited to the embodiments disclosed in the description.

The present invention relates to an electric machine, particularly to an electric compressor, provided in an air-conditioning loop of a vehicle. Generally, the electric compressor includes a motor housing provided with an electric motor and an inverter housing provided with an inverter unit. The motor housing and the inverter housing are coupled together to enable connection between the electric motor and the inverter unit. Further, the electric motor is connected with a compression unit to compress a refrigerant flowing therein. The inverter housing is of cylindrical shape with one closed end and one open end. Further, the open end of the inverter housing is closed by a cover after assembling the inverter unit into the inverter housing. The cover may experience vibrations and static load during the operation of the electric machine. Such vibrations and the load acting on the cover results in developing of stress on the centre part of the cover. As a result, the cover may be damaged or the service life of the cover may be reduced. To avoid such problems, ribs are provided on an outer surface of the cover of the electric machine. The ribs may provide robustness to the cover during operation of the electric machine. Further, geometry and placement of the ribs are described with respect to the forthcoming figures.

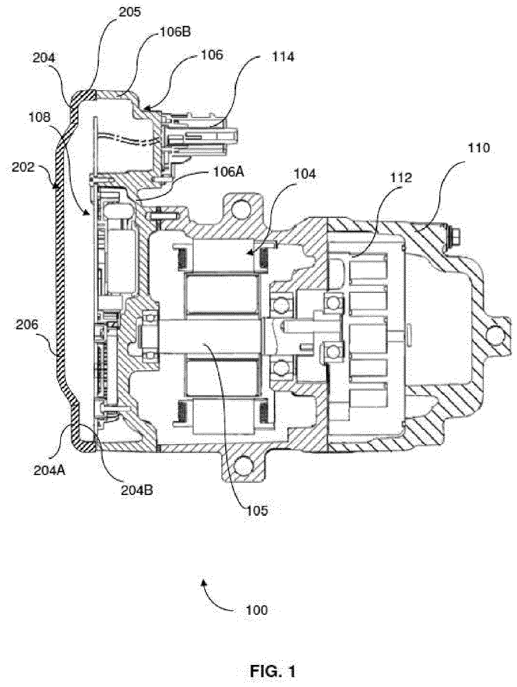

Fig. 1 illustrates a sectional view of an electric machine 100, in accordance with an embodiment of the present invention. In present embodiment, the electric machine 100 is an electric compressor, particularly, an inverter integrated motor driven electric compressor 100. The electric machine 100 is provided in a refrigerant circuit of a vehicle. Generally, the electric machine 100 is provided in the refrigerant circuit of the vehicle to compress the refrigerant flowing therein. The electric machine 100 includes a first housing 102 adapted to accommodate an electric motor 104, a second housing 106 adapted to accommodate an inverter unit 108, and a third housing 110 adapted to accommodate a compression unit 112. Further, the first housing 102, the second housing 106 and the third housing 110 are integrally fastened with fastening means (not shown), such as bolts, so as to form a casing of the electric machine 100. In one embodiment, the first housing 102, the second housing 106 and the third housing 110 are formed of metal, particularly of aluminium die-casting.

The electric motor 104 provided in the first housing 102 includes a stator and a rotor. Further, a rotary shaft 104A is connected to the rotor, and the rotary shaft 105 is extending into the third housing 110 to couple with the compression unit 112. The first housing 102 being motor housing is formed of a cylindrical shape having openings on both sides to accommodate the electric motor 104. Further, one end of the first housing 102 is coupled to the third housing 110 having the compression unit 112. From other end of the first housing 102, the electric motor 104 is inserted and is coupled with the second housing 106 having the inverter unit 108. When the electric motor 104 is energized, the rotary shaft 105 drives the compression unit 122 provided in the third housing 120.

The compression unit 112 provided in the third housing 110 includes a fixed scroll and an orbiting scroll for compressing the refrigerant flowing therein. In one embodiment, the fixed scroll is fixedly and integrally formed with the third housing 110. The orbiting scroll is rotatably connected with an eccentric pin formed of the rotary shaft 104A extending from the first housing 102. The orbiting scroll is adapted to compress the refrigerant at a compression space defined between the fixed scroll and the orbiting scroll when the rotary shaft 104A is rotated by the electric motor 104. In other words, the refrigerant in the compression space is compressed by orbiting motion of the orbiting scroll with respect to the fixed scroll. Further, a suction port (not shown in Figure) is formed integrally with the first housing 102 for sucking the refrigerant into the electric machine 100. The suctioned refrigerant from the suction port at the first housing 102 may flow through the electric motor 104 to cool or absorb heat generated by the electric motor 104 and enter into the third housing 110 for compression process. Thereafter, the compressed refrigerant egresses from the electric machine 100 through a discharge port (not shown in Figure) formed integrally with the third housing 110.

The inverter unit 108 accommodated in the second housing 106, being an inverter housing, is adapted to drive the electric motor 104 in a controlled manner. In one example, the inverter unit 108 can also referred to as inverter assembly. The inverter unit 108 includes a plurality of electronic components mounted on a printed circuit board to perform required operations. The circuit board is powered from an external source, such as a battery of the vehicle. The second housing 106 is provided with connectors 114 on the outer surface of the second housing 106. The connectors 114 can be a high voltage connector electrically adapted to be connected to the inverter unit 108 for providing high voltage to the electric motor 104 and a low voltage connector adapted to be electrically connected to the inverter unit 108 for providing control signals to the electric motor 104.

Further, the second housing 106 may be formed of a base part 106A and sidewalls 106B formed at the periphery of the base part 106A. Here, the base part 106A radially extends over a diameter of the first housing 102. In other words, the length of the base part 106A extends over the diameter of the first housing 102. The sidewalls 106B is extended from the base part 106A in direction facing away from the first housing 102. In other words, the sidewalls 106B is extended from an inner surface of the base part 106A of the second housing 106. Here, the inner surface is a surface facing the inverter unit 108 received in the second housing 106. Further, the connectors 114 are provided on an external surface of the base part 106A at the extended portion as shown in Fig. 1. As the sidewalls 106B extending from the base part 106A of the second housing 106, the sidewalls 106B define a chamber having an open end to receive the inverter unit 108. Further, the open end of the second housing 106 can be closed by a closing means upon assembling of the inverter unit 108 in the second housing 106.

Further, the electric machine 100 includes a cover 202 adapted to close the open end of the second housing 106. To avoid problems as explained above, ribs 206 are provided on the cover 202 and the ribs 206 may provide reinforcement to the cover 202. The cover 202 may include a flat portion 204 having an external surface 204A and an internal surface 204B and peripheral wall 205 formed on the periphery of the flat portion 204. Here, the peripheral wall 205 extends from the flap portion 204 towards the second housing 106. As shown in Fig. 1, the peripheral wall 205 of the cover 202 is complementary to the sidewalls 106B of the second housing 106 when the cover 202 is coupled to the second housing 106. In one example, dimensions of the base part 106A of the second housing 106 is complementary to the dimensions of the flat portion 204 of the cover 202, so that cover 202 can close the open end of the second housing 106. Further, geometry and location of the ribs on the cover 202 are explained with respect to the forthcoming figures.

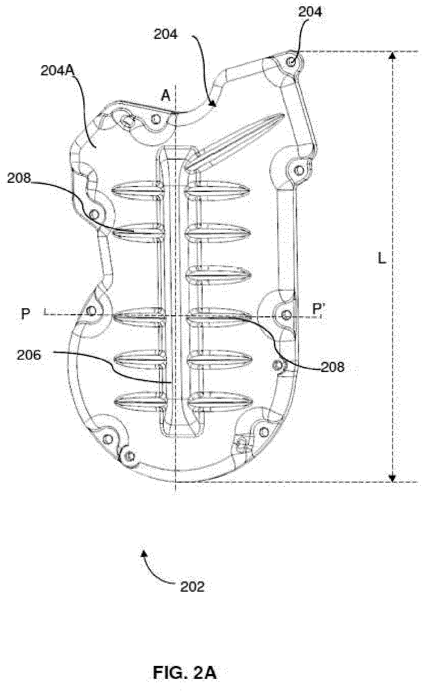

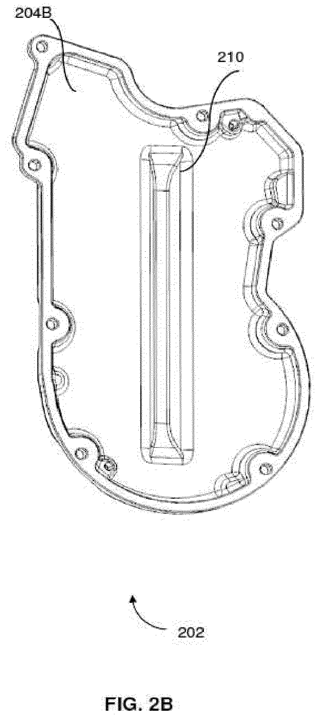

Figs. 2A-B illustrate schematic view of the cover 202 of Fig. 1. Particularly, Fig. 2A shows a top view of the cover 202 depicting the external surface 204A of the cover 202 and Fig. 2B shows a bottom view of the cover 202 depicting the internal surface 204B of the cover 202. The cover 202 may include a plurality of holes 212 formed on the peripheral wall 205 along the length of wall to allow passing of a fastening means once the cover 202 is assembled on the second housing 106. As explained above, the peripheral wall 205 of the cover 202 is fastened to the sidewalls 106B the second housing 106 through any fastening means such as screws, whereas the centre part of the cover 202 remains unconnected to the second housing 106. In other words, the centre part of the cover 202 is free from any connection with external elements; hence, the centre part of the cover 202 is vulnerable to the vibrations. In case the stiffness of the cover 202 is not enough to withstand the vibrations during the operation of the electric machine 100, the cover 202 may damage. To counter these issues and increase stiffness of the cover, a reinforcement is provided to the centre part of the cover 202 in the form of ribs 206

The cover 202 includes at least one main rib 206 and a plurality of auxiliary ribs 208 formed on the flat portion 204 of the cover 202. The main rib 206 and the auxiliary ribs 208 provide stiffness/reinforcement to the cover 202, so that the cover 202 can withstand vibrations and static load during the operation of the electric machine 100. The main rib 206 and the auxiliary ribs 208 are formed on the flat portion 204 of the cover 202 without disturbing any electrical connections in the second housing 106. The main rib 206 and the auxiliary ribs 208 are formed on any one of the surface of the flat portion 204 of the cover 202. As explained above, the cover 202 has the flat portion 204 having the external surface 204A and the internal surface 204B opposite to the external surface 204A. Here, the internal surface 204B of the cover 202 means a surface facing the inverter unit 108 when the cover 202 is fastened to the second housing 106 and the external surface 204A of the cover 202 means a surface facing away from the inverter unit 108. In the preferred example, the main rib 206 and the auxiliary ribs 208 are formed on the external surface 204A of the flat portion 204 of the cover 202.

The main rib 206 is formed on the external surface 204A of the cover 202 along a length "L" of the cover 202. As the flat portion 204 of the cover 202 is complementary to the base part 106A of the second housing 106, the length L here is meansured along the extended portion of the base part 106A of the second housing 106. Here, the length "L" of the cover 202 is measured between two peripheries having longest distance. In other words, the length "L" is a length between two farthest peripheries of the cover 202. Further, the auxiliary ribs 208 are extending to a distance from the main rib 206 towards the periphery of the cover 202. In a preferred example, as shown in Figs. 2A-B, the main rib 206 is a continuous rib formed on the external surface 204A of the flat portion 204 of the cover 202 and the auxiliary ribs 208 are perpendicularly extending from the main rib 206 with respect to a main axis "A" of the main rib 206.

The main rib 206 may be a protrusion formed along the external surface 204A of the flat portion 204 of the cover 202. As the main rib 206 is protruded along the external surface 204A, a cavity 210 may be formed on the internal surface 204B corresponding to the protruded part of the main rib 206 as shown in Fig. 2B. The auxiliary ribs 208 may be formed on the external surface 204A without disturbing profile of the internal surface 204B of the cover 202.

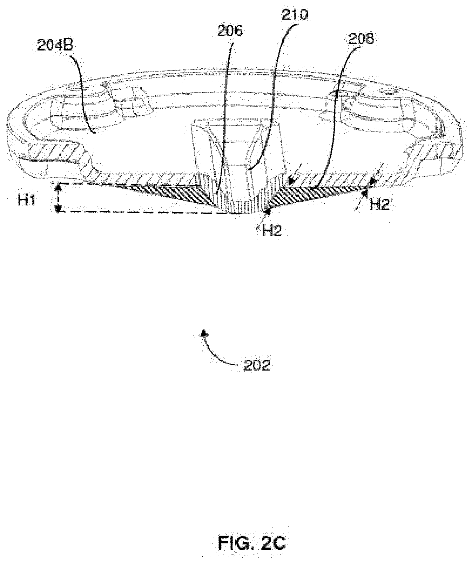

Fig. 2C illustrates a sectional view of the cover 202 of Fig. 2A at the plane P-P'. In this example, the height of the main rib 206 protruded from the external surface 204A of the flat portion 204 is referred to as H1, whereas the height of the auxiliary ribs 208 is referred to as H2-H2'. The height of the main rib 206 may be more than of the height of the auxiliary ribs 208. Here, the height "H1" of the main rib 206 means a distance between the external surface 204A of the flat portion 204 of the cover 202 and a crest point of the main rib 206. In one example, the main rib 206 is formed as an inverted U shape on the external surface 204A of the flat portion 204 of the cover 202.

In a preferred example, the height H2-H2' of the auxiliary ribs 208 is gradually decreasing from the main rib 206 towards the periphery of the cover 202. Particularly, the height H2 of the auxiliary ribs 208 at a proximal end of the auxiliary ribs 208 with respect to the main rib 206 is more than the height H2' of the auxiliary ribs 208 at a distal end of the auxiliary ribs 202 with respect to the main rib 206. The auxiliary ribs 208 may be formed as a slope, in which the height of auxiliary ribs 208 is decreasing from the main rib 206 towards the periphery of the cover 202. In another example, height of the auxiliary ribs 208 is consistent from the proximal end to the distal end of the auxiliary ribs 208 with respect to the main rib 206. Particularly, the height H2 is same as the height H2' of the auxiliary ribs 208. This example is not shown in Figures.

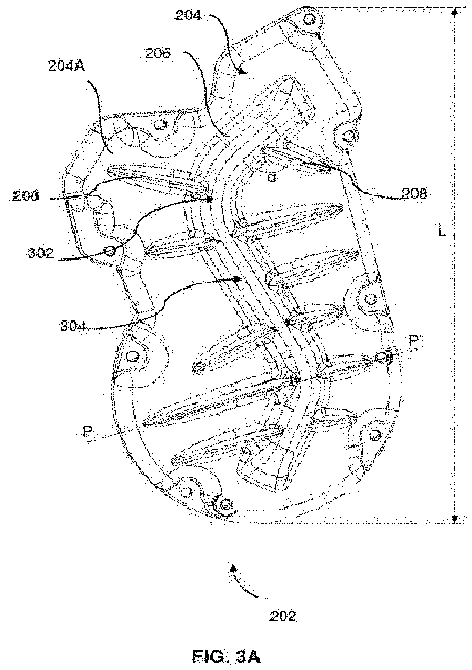

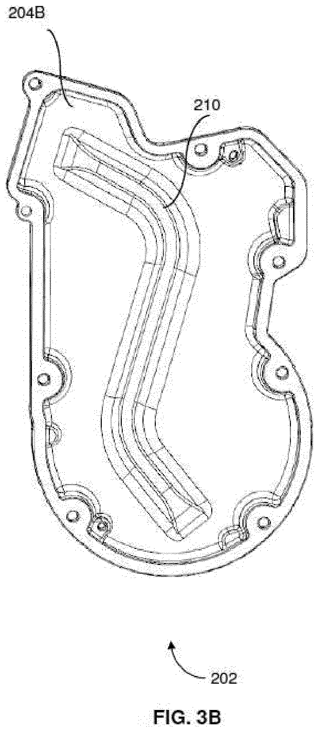

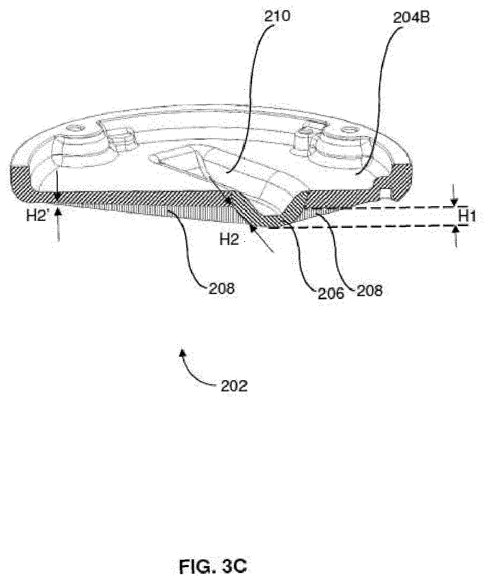

Fig. 3A-C illustrate various view of the cover 202 of Fig. 1, in accordance with another embodiment of the present invention. In this example, Fig. 3A is a top view of the cover 202 showing the external surface 204A of the flat portion 204 of the cover 202, Fig. 3B is a bottom view of the cover 202 showing the internal surface 204B of the flat portion 204 of the cover 202 and Fig. 3C is a sectional view of the cover 202 at the plane P-P' of Fig. 3A. According to the present embodiment, the main rib 206 is a curved rib formed on the external surface 204A of the flat portion 204 of the cover 202, as shown in Fig. 3A. In one example, the main rib 206 is an "S" shaped rib formed on the external surface 204A of the flat portion 204 of the cover 202. Further, the main rib 206 is formed between two distal ends on the external surface 204A of the flat portion 204. Here, the distal ends of the cover 202 refer to two ends, which are distal with respect to the centre of the main rib 206.

In another example, the main rib 206 being the curved rib having at least one curved portion 302 and a straight portion 304. Here, the curved portion 302 and the straight portion 304 are alternatively formed with respect to each other formed on the external surface 204A of the flat portion 204 of the cover 202 along the length "L" between two distal ends of the cover 202. As explained above, the auxiliary ribs 208 are extending from the main rib 206 towards the periphery of the cover 202. In one example, the auxiliary ribs 208 are perpendicularly extending from the main rib 206 with respect to the axis of the main rib 206. In another example, the auxiliary ribs 208 are angularly extending from the main rib 206 with respect to the axis of the main rib 206. In other words, the auxiliary ribs 208 are connected to the main rib 206 at an angle "α".

As explained with respect to the previous embodiment, the main rib 206, of the present embodiment, is also be a protrusion formed along the external surface 204A of the cover 202. As the main rib 206 is protruded along the external surface 204A of the flat portion 204 of the cover 202, the cavity 210 may be formed on the internal surface 204B corresponding to the protruded part of the main rib 206 as shown in Fig. 3B. The auxiliary ribs 208 may be formed on the external surface 204A without disturbing profile of the internal surface 204B of the cover 202.

As explained above, the height of the main rib 206 protruded from the external surface 204A is referred to as H1, whereas the height of the auxiliary ribs 208 is referred to as H2, H2'. In the present embodiment, the height of the main rib 206 may be higher than the height of the auxiliary ribs 208, as explained in the previous embodiment. Similarly, the height H2-H2' of the auxiliary ribs 208 is gradually decreasing from the main rib 206 towards the periphery of the cover 202. Particularly, the height H2 of the auxiliary ribs 208 at a proximal end of the auxiliary ribs 208 with respect to the main rib 206 is more than the height H2' of the auxiliary ribs 208 at a distal end of the auxiliary ribs 208 with respect to the main rib 206.

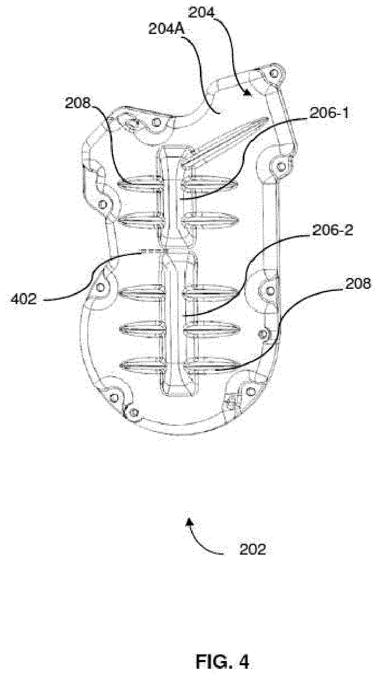

Fig. 4 illustrates a schematic view of the cover 202 of Fig. 1 depicting a discontinuous main rib 206 formed on the external surface 204A of the cover 202, in accordance with another embodiment of the present invention. According to the present invention, the main rib 206 is discontinuous ribs 206-1, 206-2. In between two main ribs 206-1, 206-2, there is a gap 402 on the external surface 204A of the cover 202. Here, the gap 402 may be as small as possible, so that the stiffness of the cover 202 remains uncompromised.

Although the main rib 206 and auxiliary ribs 208 are formed on the external surface 204A of the flat portion 204 of the cover 202, it is possible to define the main rib 206 and auxiliary ribs 208 on the inner surface 204B of the flat portion 204 of the cover 202. Here, the inner surface 204B of the flat portion 204 of the cover 202 means the surface facing the inverter unit 108 provided in the second housing 106 when the cover 202 is fastened to the second housing 106.

According to above embodiments, the main rib 206 and auxiliary ribs 208 are providing reinforcement to the centre area of the cover 202. Hence, the stiffness of the cover 202 is increased. As the main rib 206 and the auxiliary ribs 208 are external surface 204A of the flat portion 204, the ribs 206, 208 may not disturb the electrical connections provided inside the second housing 106, i.e., it may not disturb the inverter unit 108 of the second housing 106. Further, the main rib 206 and auxiliary ribs 208 are adapted to withstand the vibration acting on the cover 202 when the electric machine is function thereon, thereby avoid air-bone noise in the electric machine 100. Also, the cover 202 withstands the static load without deforming at the centre the cover 202 when the electric machine 100 is packed in the vehicle. As the cover 202 has two independent ribs, it can be applied to non-circular or any shaped housing of the electric machine 100.

All the above-described embodiments are just to explain the present invention while more embodiments and combinations thereof might exist. Hence, the present invention should not be limited to the above-described embodiments alone.

## Claims

1. A cover (202) for a housing encapsulating an inverter unit of an electric machine, comprising:
at least one main rib (206) formed on a surface of the cover (202) along a length "L" of the cover (202); and
a plurality of auxiliary ribs (208) extending to a distance from the main rib (206) towards a periphery of the cover (202).

2. The cover (202) as claimed in claim 1, the main rib (206) is a straight rib formed along the length "L" between two distal ends of the cover (202).

3. The cover (202) as claimed in claim 1, wherein the main rib (206) is an "S" shaped rib formed between two distal ends of the cover (202).

4. The cover (202) as claimed in claim 1, wherein the main rib (206) comprising at least one curved portion and a straight portion alternatively formed with each other along the length of the cover (202).

5. The cover (202) as claimed in any one of preceding claims, wherein the main rib (206) is discontinuous ribs formed on the cover (202) having a gap between two ribs.

6. The cover (202) as claimed in any one of the preceding claims, wherein the plurality of auxiliary ribs (208) is angularly extending from the main rib (206) with respect to the axis of the main rib (206).

7. The cover (202) as claimed in any one of the claims 1 to 4, wherein the plurality of auxiliary ribs (208) is perpendicularly extending from the main rib (206).

8. An electric machine (100), comprising:
a motor housing (102) adapted to accommodate an electric motor (104);
an inverter housing (106) having an open end to receive and accommodate an inverter unit (108), wherein the inverter housing (106) is disposed at a side of the motor housing (102), wherein the inverter unit (108) is electrically connected to the electric motor (104) to control the electric motor (104); and
a cover (202) adapted to close the open end of the inverter housing (106), as claimed in any one of the preceding claims.

9. The electric machine (100) as claimed in claim 8, wherein the main rib (206) and the plurality of auxiliary ribs (208) are formed on an external surface (204A) of the cover (202) facing away from the inverter unit (108) received in the inverter housing (106).

10. The electric machine as claimed in claim 8, wherein the main rib (206) and the plurality of auxiliary ribs (208) are formed on an inner surface (204B) of the cover (202) facing towards the inverter unit (108) received in the inverter housing (106).
